# EUROPEAN PATENT SPECIFICATION

(11) **EP 3 566 884 B1**
(45) Date of publication and mention of the grant of the patent: **24.03.2021**
(21) Application number: 17890799.4
(22) Date of filing: 26.12.2017
(51) Int. Cl.: B60C 9/09, B60C 15/00, B60C 15/06, B60C 15/04, B60C 9/06

(54) **PNEUMATIC TIRE FOR TWO-WHEELED MOTOR VEHICLES**
LUFTREIFEN FÜR ZWEIRÄDRIGE KRAFTFAHRZEUGE
PNEU POUR VÉHICULES À MOTEUR À DEUX ROUES

(30) Priority: 06.01.2017 JP 2017001425
(43) Date of publication of application: 13.11.2019
(73) Proprietor: Bridgestone Corporation, Tokyo 104-8340 (JP)
(72) Inventor: TOKITOH, Yasufumi, Tokyo 104-8340 (JP)
(74) Representative: Oxley, Robin John George
(86) International application number: PCT/JP2017/046739
(87) International publication number: WO 2018/128132

(56) References cited:
- DE-T5-112013 005 736
- JP-A- H09 309 303
- JP-A- 2001 301 416
- JP-A- 2004 142 533
- JP-A- 2006 111 121
- JP-A- 2006 290 164
- JP-A- 2013 139 191

## Description

### TECHNICAL FIELD

The present invention relates to a pneumatic tire for two-wheeled motor vehicles (hereinafter, also simply referred to as "tire"), particularly a pneumatic tire for two-wheeled motor vehicles in which the durability of bead portions is improved than in conventional tires.

### BACKGROUND ART

In two-wheeled motor vehicles, usually, a textile cord of a polyamide (e.g., nylon), a polyester or the like is used in a carcass ply, and the number of carcass plies are selected to be one or two as appropriate in accordance with the vehicle's engine displacement. Particularly, in those tires for two-wheeled motor vehicles in which two radial carcass layers are used, structures in which the two radial carcass layers are simultaneously wound up to the vicinity of the carcass maximum width position from the inside toward the outside of the respective bead cores and thereby anchored, or the inner carcass ply is wound up from the inside toward the outside of the respective bead cores while the outer carcass ply extends from a bead portion on one side to a bead portion on the other side with the ends of this outer carcass ply reaching the lateral positions of the respective bead cores, are known.

A variety of proposals have been made with regard to tires for two-wheeled motor vehicles that have such an up-down structure. For example, Patent Document 1 proposes a structure in which a first carcass ply layer is wound up to the end of a belt and the wound-up portion of this carcass ply is sandwiched and anchored between a belt-end region and the carcass ply while a second carcass ply layer extends at least from the belt-end region to the respective bead portions over a carcass ply maximum width position. By adopting this structure, carcass plies are provided in three layers from a buttress region to the respective bead portions, so that uniform and appropriate tire-case rigidity can be attained over the entirety of the tire side regions and the driving stability is greatly improved without deteriorating the ride comfortability.

Further, with regard to a tire for two-wheeled motor vehicles which includes four or more layers of carcass plies, Patent Document 2 proposes a structure in which the ends of at least one carcass ply other than the carcass plies positioned on the innermost or outermost side is arranged near the respective bead cores without being wound up around the bead cores while the ends of other carcass plies are wound up around the bead cores. By adopting this structure, the efficiency of the tire molding operation is improved and a reduction in the durability of the resulting tire is inhibited.

### RELATED ART DOCUMENTS

### PATENT DOCUMENTS

[Patent Document 1] JP2000-211317A
[Patent Document 2] JPS56-108302A

Patent document DE112013005736T5 shows a prior art car tire with two carcass plies being wound around the bead core and an additional carcass ply covering the both terminal ends of both plies from the axially outer side, wherein the covering ply is not wound around the bead core.

### SUMMARY OF THE INVENTION

### PROBLEMS TO BE SOLVED BY THE INVENTION

The structures proposed in Patent Documents 1 and 2 do not particularly cause a problem in tires having a load index of 71 (load capacity: 345 kg). However, in tires having a load index of higher than 77 (load capacity: 412 kg) that are used in higher load and higher internal pressure conditions, a further improvement in the durability of bead portions is desired at present.

In view of the above, an object of the present invention is to solve the above-described problems and provide a pneumatic tire for two-wheeled motor vehicles in which the durability of bead portions is improved than in conventional tires.

### MEANS FOR SOLVING THE PROBLEMS

The present inventor intensively studied to solve the above-described problems and consequently discovered that the durability of bead portions can be improved by adopting a prescribed arrangement of plural layers of bias carcass plies, thereby completing the present invention.

That is, the pneumatic tire for two-wheeled motor vehicles according to the present invention is a pneumatic tire for two-wheeled motor vehicles that includes: a tread portion formed in an annular shape; side wall portions and bead portions, which continuously extend on the respective ends of the tread portion; a carcass composed of at least three layers of carcass plies toroidally extending on the tire radial-direction inner side of the tread portion; a belt composed of at least two belt layers arranged on the tire radial-direction outer side of the carcass; and bead cores embedded in the bead portions, the pneumatic tire being characterized in that:
the at least three layers of carcass plies have a bias structure, and
the at least three layers of carcass plies include at least two layers of turn-up carcass plies which are folded back around the bead cores, and at least one layer of down carcass ply which is arranged on the tire radial-direction outer side of the turn-up carcass plies and terminated on the tire width-direction outer side of the bead portions without being folded back around the bead cores.

The tire of the present invention preferably includes a cover member covering each of the bead cores. Further, in the tire of the present invention, it is preferred that the bead cores be strand beads formed by winding bead wires, and that the bead wires be arranged in six rows and four columns in a cross-sectional view of the bead cores.

### EFFECTS OF THE INVENTION

According to the present invention, a pneumatic tire for two-wheeled motor vehicles in which the durability of bead portions is improved than in conventional tires can be provided. Particularly, the tire of the present invention is suitable as a pneumatic tire for two-wheeled motor vehicles that has a load index of higher than 71.

### BRIEF DESCRIPTION OF THE DRAWINGS

[FIG. 1] FIG. 1 is a schematic drawing that illustrates the arrangement of carcass plies of a pneumatic tire for two-wheeled motor vehicles according to one preferred embodiment of the present invention.
[FIG. 2] FIG. 2 is a schematic drawing that illustrates the arrangement of the carcass plies of the pneumatic tire for two-wheeled motor vehicles according to Example 2.
[FIG. 3] FIG. 3 is a schematic drawing that illustrates the arrangement of carcass plies of a pneumatic tire for two-wheeled motor vehicles, which includes three layers of turn-up carcass plies.

### MODE FOR CARRYING OUT THE INVENTION

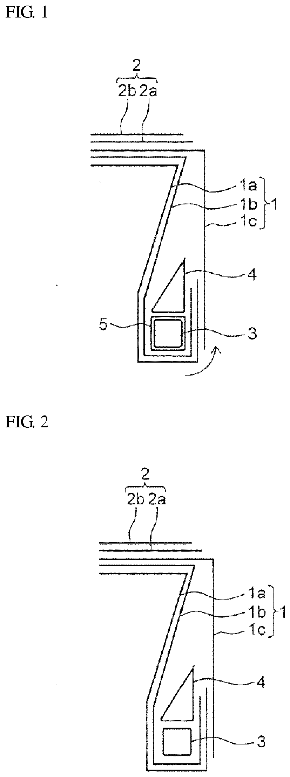

The pneumatic tire for two-wheeled motor vehicles according to the present invention will now be described in detail referring to the drawings. FIG. 1 is a schematic drawing that illustrates the arrangement of carcass plies of a pneumatic tire for two-wheeled motor vehicles according to one preferred embodiment of the present invention. The tire of the present invention includes: a tread portion formed in an annular shape; and side wall portions and bead portions, which continuously extend on the respective ends of the tread portion. In addition, the tire of the present invention includes: a carcass composed of at least three layers of carcass plies toroidally extending on the tire radial-direction inner side of the tread portion (a carcass 1 composed of three layers of carcass plies 1a, 1b and 1c in the illustrated example); at least two belt layers arranged on the tire radial-direction outer side of the carcass 1 (a belt 2 composed of belt layers 2a and 2b in the illustrated example); and bead cores 3 embedded in the respective bead portions. Further, in the illustrated example, a bead filler 4 is arranged on the tire radial-direction outer side of each bead core 3.

In the tire of the present invention, the carcass plies have a bias structure and, for example, the carcass plies may have a bias structure in which ply cords of the carcass 1 are arranged at an angle of 20° to 60° with respect to the tire equator and the carcass 1 is composed of at least three layers of the carcass plies that intersect with each other between adjacent layers. Such a bias structure is advantageous in that, since the entire region of the tire from the respective side portions to the tread portion is constituted by the intersecting carcass layers, rigidity is likely to be ensured by the function of a laminated plate. In other words, the bias structure is a structure which is likely to achieve both satisfactory performance in terms of gripping force, ground-contact feeling and the like, and satisfactory tire rigidity. As the carcass plies, plural ply cords coated with a coating rubber can be used and, as the ply cords, for example, organic fibers of nylon, rayon, polyester or the like can be used.

Moreover, in the tire of the present invention, the at least three layers of the carcass plies include: at least two layers of turn-up carcass plies which are folded back around the bead cores; and at least one layer of down carcass ply which is arranged on the tire radial-direction outer side of the turn-up carcass plies and terminated on the tire width-direction outer side of the bead portions without being folded back around the bead cores. Particularly, a structure in which the outermost carcass ply is a down carcass ply is preferred and, in the illustrated example, the carcass plies 1a and 1b on the inner side are turn-up carcass plies, while the carcass ply 1c constituting the outermost layer is a down carcass ply.

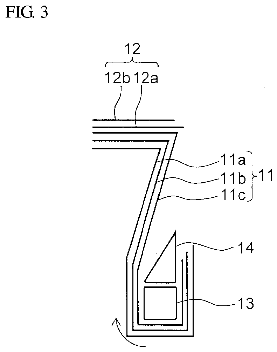

FIG. 3 is a schematic drawing that illustrates the arrangement of carcass plies of a pneumatic tire for two-wheeled motor vehicles, which includes three layers of turn-up carcass plies. In this illustrated example, a belt 12 composed of two belt layers 12a and 12b is arranged on the tire radial-direction outer side of three layers of turn-up carcass plies 11a, 11b and 11c, and a bead filler 14 is arranged on the tire radial-direction outer side of a bead core 13. As the bead core 13, a strand bead, which is formed as a bundle of annular bead wires by winding one or plural bead wires made of steel or the like along the tire circumferential direction and in layers in the tire radial direction such that the bead wires are arranged in a prescribed number of rows and columns in a tire widthwise cross-section, is generally used.

In the pneumatic tire for two-wheeled motor vehicles, the carcass plies 11a, 11b and 11c move in a pull-out direction indicated by an arrow in FIG. 3 when the tire rolls under load. Accordingly, detachment of a bead wire and rubber occurs at a site on the tire width-direction inner side, which is the uppermost part in FIG. 3 and on the tire radial-direction outer side of the bead core 13. As a result, the separated bead wire comes into contact with the carcass ply 11c to cause fretting, whereby the carcass 11 is broken and the bead core 13 is exposed.

Therefore, in the tire of the present invention, as illustrated in FIG. 1, at least one layer of the down carcass ply 1c is arranged in addition to at least two layers of the turn-up carcass plies 1a and 1b. The reason for this is as follows. That is, as indicated by an arrow in FIG. 1, the pull-out direction of the down carcass ply 1c is opposite to the pull-out direction of the turn-up carcass plies 1a and 1b. Thus, by arranging the down carcass ply 11c, the movement of the carcass plies 1a and 1b in the pull-out direction can be suppressed. As a result, fretting of the bead core 3 and the carcass 1 can be suppressed, so that the breakage of the carcass 1 caused by this fretting can be inhibited.

It is preferred that the tire of the present invention include a cover member 5 which covers each bead core 3. By covering each bead core 3 with the cover member 5, separation of the bead wires constituting the bead core 3 is suppressed, so that not only fretting of the bead wires and the carcass 1 can be more effectively inhibited but also the durability of the bead portions can be improved. The cover member 5 is not particularly restricted as long as it is capable of inhibiting the separation of the bead wires.

As the cover member 5, any known non-extensible high-elasticity cord made of, for example, organic fibers such as fibers of aromatic polyamide (aramid, e.g., trade name "KEVLAR®" manufactured by DuPont), polyethylene naphthalate (PEN), polyethylene terephthalate (PET), polyketone, rayon, nylon or the like, or a material such as steel, glass fibers or carbon fibers, may be selected as appropriate, and a rubber-coated cover tape can be preferably used. The cover member 5 is not necessarily required to be coated with a rubber and may have no rubber coating; however, the cover member 5 coated with a rubber is easily adhered with the surrounding members and thus a preferred mode. Further, it is not necessarily required to use a cord as the cover member 5, and the cover member 5 may be in a sheet form.

A rubber component of a rubber composition constituting a coating rubber of the cover member 5 may be either a natural rubber or a synthetic rubber, and examples of the synthetic rubber include styrene-butadiene copolymer rubbers (SBR), butadiene rubbers (BR), isoprene rubbers (IR), butyl rubbers (IIR), halogenated butyl rubbers, butadiene-acrylonitrile copolymer rubbers (NBR), ethylene-propylene-diene rubbers (EPDM), and mixtures thereof. Further, in the rubber composition of the coating rubber, carbon black can be used as a reinforcing filler, and various components normally used in the rubber industry, such as zinc white and an age resistor, can be incorporated as well.

In the tire of the present invention, the structure of the bead cores 3 is not particularly restricted, and bead cores formed in a ring shape in advance, such as strand beads, hexagonal beads or cable beads, can be used; however, in the tire of the present invention, it is preferred that the bead cores 3 be strand beads formed by winding bead wires made of steel and have a structure in which the bead wires are arranged in six rows and four columns in cross-sectional view. During the rolling of the pneumatic tire for two-wheeled motor vehicles under load, when the carcass plies move in the pull-out direction, the bead cores adjacent thereto are also pulled by the carcass plies and thereby rotated. Consequently, the carcass 1 is broken due to fretting between the carcass plies and the bead cores. However, the strand beads having a structure of six rows and four columns exert a large effect of suppressing the movement of the bead cores in the rotational direction; therefore, the effects of the present invention can be attained most prominently.

Moreover, in the tire of the present invention, the belt 2 composed of at least two belt layers, (the belt layers 2a and 2b in the illustrated example) is arranged on the tire radial-direction outer side of the carcass 1. In the tire of the present invention, the belt 2 is not particularly restricted as long as it is composed of at least two belt layers, and any conventionally known structure can be adopted. For example, the belt 2 may be composed of two or more inclined belt layers that are arranged in such a manner that their belt cord directions intersect with each other between the layers, and one or more spiral belt layers whose belt cord directions are substantially the tire circumferential direction may also be arranged on the tire radial-direction outer side of the inclined belt layers. The belt cords of the belt layers are not particularly restricted, and any known non-extensible high-elasticity cord can be used. For example, the belt cords can be selected as appropriate from cords made of, for example, organic fibers such as fibers of aromatic polyamide (aramid, e.g., trade name "KEVLAR" manufactured by DuPont), polyethylene naphthalate (PEN), polyethylene terephthalate (PET), rayon, nylon or the like, or a material such as steel, glass fibers or carbon fibers.

In the pneumatic tire for two-wheeled motor vehicles according to the present invention, it is important that the pneumatic tire include at least three layers of carcass plies having a bias structure and that, among the at least three layers of carcass plies, at least two layers be turn-up carcass plies and at least one layer be a down carcass ply, and there is no other particular restriction. For example, in the tire of the present invention, an inner liner may be arranged as the innermost layer, and a tread pattern may be formed on the surface of the tread portion as appropriate. The tire of the present invention can be used as both a rear tire and a front tire. Further, as a gas filled into the tire of the present invention, air having normal or adjusted oxygen partial pressure, or an inert gas such as nitrogen, can be used.

### EXAMPLES

The tire of the present invention will now be described in more detail by way of examples thereof.

### <Example 1>

A pneumatic tire for two-wheeled motor vehicles, which had a carcass structure of the type illustrated in FIG. 1, was produced at a tire size of 150/80B16M/C. As the bead cores, strand bead cores which had a substantially rectangular cross-section and a structure formed by winding bead wires in six rows and four columns were used. Further, as the cover member of the respective bead cores, a rubber-coated cover tape made of nylon was used.

The carcass was constituted by three layers of carcass plies, with the carcass plies of the inner two layers being turn-up carcass plies folded back around the respective bead cores and the carcass ply of the outermost layer being a down carcass ply. Nylon was used as the ply cords of the carcass plies. The end count of the ply cords was set at 23 cords/25 mm, and the cord angle was set at ±34° with respect to the tire equator. Further, the belt was constituted by two intersecting belt layers, and aramid was used as the belt cords. The end count of the belt cords was set at 22 cords/25 mm, and the cord angle was set at 20° with respect to the tire equator.

### <Example 2>

A tire was produced in the same manner as in Example 1, except that the cover member was not arranged on the bead cores. FIG. 2 is a schematic drawing that illustrates the arrangement of the carcass plies of the pneumatic tire for two-wheeled motor vehicles according to Example 2.

### <Example 3>

A tire was produced in the same manner as in Example 1, except that the bead cores had a structure of four rows and four columns in a cross-sectional view and that the cover member was not arranged.

### <Comparative Example>

A pneumatic tire for two-wheeled motor vehicles, which had a carcass structure of the type illustrated in FIG. 3, was produced at a tire size of 150/80B16M/C. The carcass was constituted by three layers of carcass plies, all of which were turn-up carcass plies. Further, no cover member was arranged on the bead cores, and strand bead cores having a structure of four rows and four columns were used. Except for these points, this tire had the same structure as that of Example 1.

### <Durability of Bead Portions>

The thus obtained tires were each subjected to a test in which a load having a loading capacity of 11.4 kN was applied to each tire under the conditions where the maximum air pressure was 340 kPa and the application rim was MT3.50, and each tire was allowed to run on a drum tester of 1.7 m in radius at a speed of 81 km/h until a bead wire was exposed from a bead portion. The distance traveled until a bead wire was exposed from a bead portion was measured and indicated as an index, taking the value of Comparative Example as 100. A larger value means superior durability.

**[Table 1]**

| | Example 1 | Example 2 | Example 3 | Comparative Example |
|---|---|---|---|---|
| Carcass structure | FIG. 1 | FIG. 2 | FIG. 2 | FIG. 3 |
| Presence or absence of cover member | present | absent | absent | absent |
| Bead core structure | 6 rows and 4 columns | 6 rows and 4 columns | 4 rows and 4 columns | 4 rows and 4 columns |
| Durability of bead portions (index) | 140 | 130 | 110 | 100 |

From Table 1 above, it is seen that the durability of the bead portions was improved in the tires according to the present invention as compared to a conventional tire.

### DESCRIPTION OF SYMBOLS

1, 11: carcass
1a, 1b, 1c, 11a, 11b, 11c: carcass ply
2, 12: belt
2a, 2b, 12a, 12b: belt layer
3, 13: bead core
4, 14: bead filler
5: cover member

## Claims

1. A pneumatic tire for two-wheeled motor vehicles, comprising:
a tread portion formed in an annular shape;
side wall portions and bead portions, which continuously extend on the respective ends of the tread portion;
a carcass (1, 11) composed of at least three layers of carcass plies (1a, 1b, 1c) toroidally extending on the tire radial-direction inner side of the tread portion;
a belt (2, 12) composed of at least two belt layers (2a, 2b) arranged on the tire radial-direction outer side of the carcass; and
bead cores (3) embedded in the bead portions,
wherein
the at least three layers of carcass plies (1a, 1b, 1c) have a bias structure, and
the at least three layers of carcass plies comprise at least two layers of turn-up carcass plies (1a, 1b) which are folded back around the bead cores, and at least one layer of down carcass ply (1c) which is arranged on the tire radial-direction outer side of the turn-up carcass plies and terminated on the tire width-direction outer side of the bead portions without being folded back around the bead cores.

2. The pneumatic tire for two-wheeled motor vehicles according to claim 1, comprising a cover member covering each of the bead cores.

3. The pneumatic tire for two-wheeled motor vehicles according to claim 1 or 2, wherein
the bead cores are strand beads formed by winding bead wires, and
the bead wires are arranged in six rows and four columns in a cross-sectional view of the bead cores.

## Patentansprüche

1. Luftreifen für zweirädrige Kraftfahrzeuge, der Folgendes umfasst:
einen Laufflächenabschnitt, der in einer ringförmigen Gestalt ausgebildet ist,
Seitenwandabschnitte und Wulstabschnitte, die sich durchgehend an den jeweiligen Enden des Laufflächenabschnitts erstrecken,
eine Karkasse (1, 11), die aus mindestens drei Lagen von Karkassenschichten (1a, 1b, 1c) besteht, die sich kreisringförmig auf der in Reifenradialrichtung inneren Seite des Laufflächenabschnitts erstrecken,
einen Gürtel (2, 12), der aus mindestens zwei Gürtellagen (2a, 2b) besteht, die auf der in Reifenradialrichtung äußeren Seite der Karkasse angeordnet sind, und
Wulstkerne (3), die in den Wulstabschnitten eingebettet sind,
wobei
die mindestens drei Lagen von Karkassenschichten (1a, 1b, 1c) eine Vorspannstruktur aufweisen, und
die mindestens drei Lagen von Karkassenschichten mindestens zwei Lagen von hochgeschlagenen Karkassenschichten (1a, 1b), die um die Wulstkerne zurückgeklappt sind, und mindestens eine Lage einer abwärts weisenden Karkassenschicht (1c), die auf der in Reifenradialrichtung äußeren Seite der hochgeschlagenen Karkassenschichten angeordnet ist und auf der in Reifenbreitenrichtung äußeren Seite der Wulstabschnitte endet, ohne um die Wulstkerne zurückgeklappt zu sein, umfassen.

2. Luftreifen für zweirädrige Kraftfahrzeuge nach Anspruch 1, der ein Abdeckelement umfasst, das jeden der Wulstkerne abdeckt.

3. Luftreifen für zweirädrige Kraftfahrzeuge nach Anspruch 1 oder 2, wobei
die Wulstkerne Strangwülste sind, die durch Wickeln von Wulstdrähten geformt sind, und
die Wulstdrähte in einer Querschnittsansicht der Wulstkerne in sechs Zeilen und vier Spalten angeordnet sind.

## Revendications

1. Bandage pneumatique pour véhicules à moteur à deux roues, comprenant :
une partie de bande de roulement formée en une forme annulaire ;
des parties de flanc et des parties de talon, s'étendant en continu sur les extrémités respectives de la partie de bande de roulement ;
une carcasse (1, 11) composée d'au moins trois couches de nappes de carcasse (1a, 1b, 1c) s'étendant toroïdalement sur le côté interne, dans la direction radiale du bandage pneumatique, de la partie de bande de roulement :
une ceinture (2, 12) composée d'au moins deux couches de ceinture (2a, 2b) agencée sur le côté externe, dans la direction radiale du bandage pneumatique, de la carcasse ; et
des tringles (3) noyées dans les parties de talon ;
dans lequel
les au moins trois couches de nappes de carcasse (1a, 1b, 1c) ont une structure de sollicitation ; et
les au moins trois couches de nappes de carcasse comprennent au moins deux couches de nappes de carcasse à retournement vers le haut (1a, 1b) qui sont repliées autour des tringles, et au moins une couche de nappe de carcasse à retournement vers le bas (1c) agencée sur le côté externe, dans la direction radiale du bandage pneumatique, des nappes de carcasse à retournement vers le haut et se terminant sur le côté externe, dans la direction de la largeur du bandage pneumatique, des parties de talon, sans être repliées autour des tringles.

2. Bandage pneumatique pour véhicules à moteur à deux roues selon la revendication 1, comprenant un élément de couverture recouvrant chacune des tringles.

3. Bandage pneumatique pour véhicules à moteur à deux roues selon les revendications 1 ou 2, dans lequel :
les tringles sont des tringles de talon formés par enroulement de fils de tringle ; et
les fils de tringle sont agencés dans six rangées et quatre colonnes dans une vue en section transversale des tringles.
